(19) Europäisches Patentamt
European Patent Office
Office européen des brevets

(11) EP 4 183 813 A1

(12) EUROPEAN PATENT APPLICATION
published in accordance with Art. 153(4) EPC

(43) Date of publication:
**24.05.2023 Bulletin 2023/21**

(21) Application number: **21842847.2**

(22) Date of filing: **05.07.2021**

(51) International Patent Classification (IPC):
***C08G 69/26*** *(2006.01)* ***C08L 77/06*** *(2006.01)*

(52) Cooperative Patent Classification (CPC):
**C08G 69/26; C08L 77/06**

(86) International application number:
**PCT/JP2021/025287**

(87) International publication number:
**WO 2022/014390 (20.01.2022 Gazette 2022/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.07.2020 JP 2020122161**

(71) Applicant: **Mitsui Chemicals, Inc.**
**Tokyo 104-0028 (JP)**

(72) Inventors:
- **NISHINO, Kohei**
  **Sodegaura-shi,**
  **Chiba 299-0265 (JP)**
- **KOSAKA, Toshitaka**
  **Kuga-gun,**
  **Yamaguchi 740-0061 (JP)**
- **WASHIO, Isao**
  **Sodegaura-shi,**
  **Chiba 299-0265 (JP)**

(74) Representative: **Hoffmann Eitle**
**Patent- und Rechtsanwälte PartmbB**
**Arabellastraße 30**
**81925 München (DE)**

# (54) CRYSTALLINE POLYAMIDE RESIN, RESIN COMPOSITION, AND MOLDED ARTICLE

(57) Provided is a crystalline polyamide resin that can exhibit a high mechanical strength and electrical resistance in high temperature regions (in the neighborhood of 150°C). This polyamide resin has the following: a dicarboxylic acid-derived component unit (a) that includes a component unit (a1) derived from terephthalic acid, naphthalenedicarboxylic acid, or cyclohexanedicarboxylic acid, at more than 20 mol% and up to and including 100 mol% with reference to the total number of moles of the dicarboxylic acid-derived component unit (a); and a diamine-derived component unit (b) that contains a component unit (b1) deriving from alkylenediamine having 4-18 carbon atoms and a component unit (b2) deriving from diamine given by formula (1).

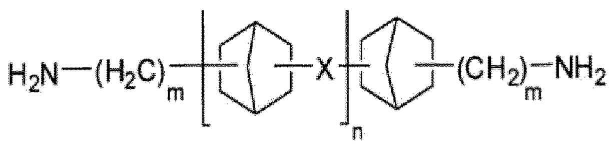

… Formula (1)

(in formula (1), n and the two m's are each independently 0 or 1, and -X- is a single bond or a divalent group selected from the group consisting of -O-, -S-, $-SO_2-$, -CO-, and $-CH_2-$)

EP 4 183 813 A1

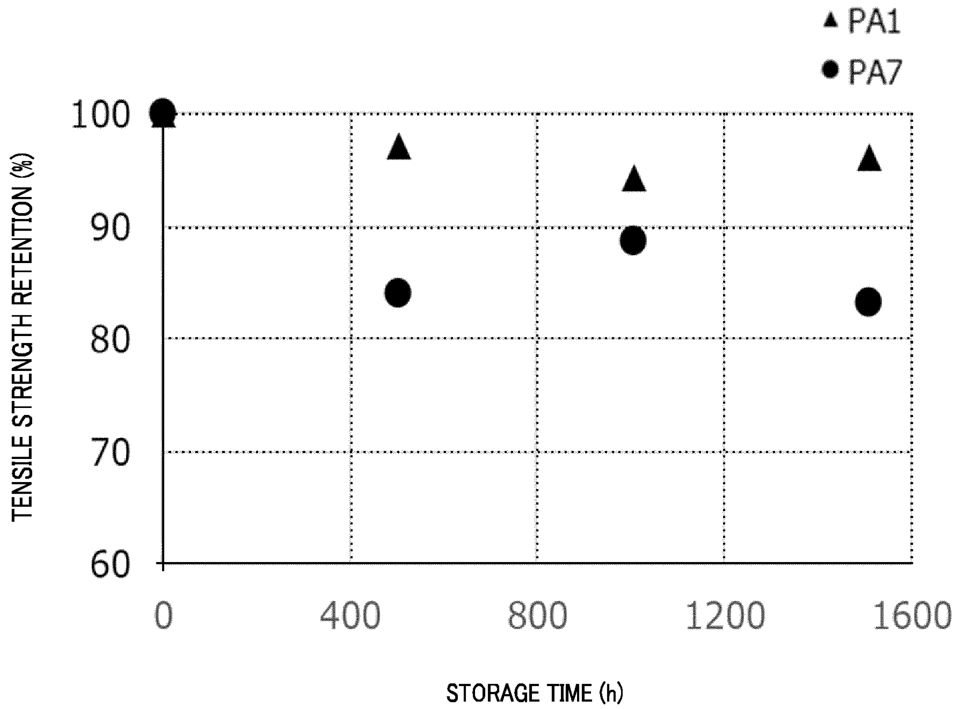
PA1
PA7
TENSILE STRENGTH RETENTION (%)
100
90
80
70
60
0
400
800
1200
1600
STORAGE TIME (h)

FIG. 1

## Description

### Technical Field

The present invention relates to a crystalline polyamide resin, a resin composition, and a molded article.

### Background Art

Polyamide resins have been widely used as materials for various parts in the applications of clothing, industrial materials, and automobiles, and electrical and electronic and industrial applications due to the excellent moldability, mechanical properties, and chemical resistance of the resins.

Attempts have been made to modify the raw materials of a polyamide resin to change the physical properties of the polyamide resin in order to develop properties according to these applications.

For example, Patent Literature (hereinafter, referred to as PTL) 1 describes the usage of bis(aminomethyl)norbornane as a diamine component to be used in producing of a polyamide by polycondensation of a dicarboxylic acid component and the diamine component. PTL 1 discloses that the polyamide containing, as the diamine component, equimolar bis(aminomethyl)norbornane and 2-methylpentamethylenediamine is transparent and has a high freezing point. PTL 1 teaches that the diamine component is selected in such a way that no crystallization occurs during the cooling in order to increase the transparency of the polyamide.

PTL 2 discloses that bis(aminomethyl)norbornane used as the diamine component is a mixture of 2,5-bis(aminomethyl)norbornane and 2,6-bis(aminomethyl)norbornane at equivalent amounts, and the molar ratio of the bis(aminomethyl)norbornane is set to 20 mol% or less, thereby obtaining a transparent polyamide having a high transition temperature.

PTL 3 meanwhile discloses that setting of the content of bis(aminomethyl)norbornane to 17 wt% or more can increase the glass transition point of the obtained polyamide to increase the heat resistance. PTL 3 discloses that the polyamide obtained by mixing hexamethylenediamine and bis(aminomethyl)norbornane with the weight ratio of hexamethylenediamine/bis(aminomethyl)norbornane of 30/70 (molar ratio of 36/64) has a high glass transition point.

### Citation List

#### Patent Literature

PTL 1
Japanese Patent Application Laid-Open No. S48-60193
PTL 2
Japanese Patent Application Laid-Open No. S53-125497
PTL 3
Japanese Patent Application Laid-Open No. S63-154739

### Summary of Invention

#### Technical Problem

As described in PTLs 1 to 3, polyamide resins having improved heat resistance due to the use of bis(aminomethyl)norbornane as a diamine component are known.

However, the polyamide resins described in PTLs 1 to 3 are amorphous transparent polyamides with no melting point observed. Therefore, although the polyamide resins are suitable for applications such as films that require transparency, these polyamide resins have low fluidity during injection molding and low mechanical strength.

With the expansion of the applications of polyamide resins in recent years, various physical properties are further required for polyamide resins. For example, a polyamide resin used as a part for electrical equipment is required to have higher electrical resistance in order to be applied to the downsized electrical equipment of recent years. In addition, in order to be applied to electrical equipment with increased output, a polyamide resin is required to exhibit high mechanical strength and electrical resistance in a high temperature range (around 150°C).

The present invention was made in view of the circumstances described above and an object of the present invention is to provide a polyamide resin that is crystalline and capable of exhibit high mechanical strength and electrical resistance in a high temperature range (around 150°C), a resin composition containing the polyamide resin, and a molded

article containing the polyamide resin.

Solution to Problem

A crystalline polyamide resin relating to an embodiment of the present invention contains a dicarboxylic acid-derived component unit (a); and a diamine-derived component unit (b), in which the dicarboxylic acid-derived component unit (a) contains a component unit (a1) derived from terephthalic acid, naphthalenedicarboxylic acid, or cyclohexanedicarboxylic acid, the content of the component unit (a1) is more than 20 mol% and 100 mol% or less based on the total number of moles of the dicarboxylic acid-derived component unit (a), and the diamine-derived component unit (b) contains a component unit (b1) derived from an alkylenediamine having 4 to 18 carbon atoms and a component unit (b2) derived from a diamine represented by the following formula (1):

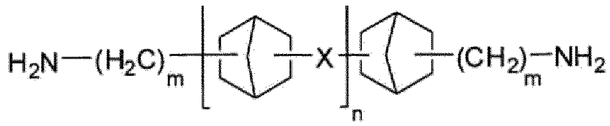

... Formula (1)

in formula (1),

n and two m's are each independently 0 or 1, and
-X- is a single bond or a divalent group selected from the group consisting of -O-, -S-, $-SO_2-$, -CO-, and $-CH_2-$.

A resin composition relating to another embodiment of the present invention contains the crystalline polyamide resin.
A molded article relating to yet another embodiment of the present invention contains the resin composition.

Advantageous Effects of Invention

The present invention can provide a polyamide resin that is crystalline and capable of exhibit high mechanical strength and electrical resistance in a high temperature range (around 150°C), a resin composition containing the polyamide resin, and a molded article containing the polyamide resin.

Brief Description of Drawings

FIG. 1 is a graph showing the heat aging resistance of polyamide resin compositions obtained from polyamide resin 1 and polyamide resin 7 in Examples; and
FIG. 2 is a graph showing the volume resistivity of the polyamide resin compositions obtained from polyamide resin 1 and polyamide resin 7 in Examples, at each temperature.

Description of Embodiments

The present inventors have found that a crystalline polyamide resin having the features described below can exhibit high mechanical strength and electrical resistance in a high temperature range (around 150°C), thereby completing the present invention: A crystalline polyamide resin containing a component unit (a) derived from a dicarboxylic acid (herein also referred to as "dicarboxylic acid-derived component unit (a)") and a component unit (b) derived from a diamine (herein also referred to as "diamine-derived component unit (b)"), where the diamine-derived component unit (b) contains a component unit (b1) derived from an alkylenediamine having 4 or more and 18 or less carbon atoms (herein, simply referred to as "4 to 18," and regarding any number of carbon atoms, similar description is applied) and a component unit (b2) derived from a diamine represented by the following formula (1):

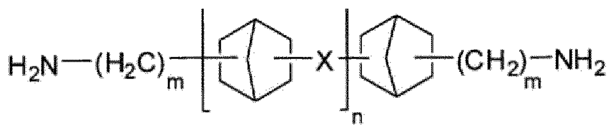

... Formula (1)

in formula (1),

n and two m's are each independently 0 or 1, and
-X- is a single bond or a divalent group selected from the group consisting of -O-, -S-, $-SO_2-$, -CO-, and $-CH_2-$.

The reason for the above advantageous effects is not clear, but it can be presumed as follows.
An alkylenediamine having at least one cyclic structure cross-linked within the same ring (the diamine represented by formula (1)) has low mobility because of the large rotational barrier (energy) due to the cyclic structure. Therefore, the alkylenediamine having such a cyclic structure can increase the glass transition temperature (Tg) of a resin as compared to an alkylenediamine having no such cyclic structure. This is considered why a crystalline polyamide resin having a component unit derived from a diamine having such a cyclic structure has high mechanical strength even in a high temperature range. For the same reason, it is considered that the crystalline polyamide resin having the component unit derived from the diamine having the above described cyclic structure can maintain high mechanical strength even in a high temperature range.
According to the findings of the present inventors, wholly aromatic polymers, such as polyether sulfone (PES), polyphenylene sulfide (PPS), and polyether ether ketone (PEEK), are more likely to suffer short circuits (tracking) due to carbonization of aromatic rings, and more likely to have low electrical resistance. On the other hand, semi-aromatic polyamides, which have a smaller number of aromatic rings, and aliphatic polyamides suffer less tracking and have high electrical resistance.
From the above, the following can be considered regarding semi-aromatic polyamides or aliphatic polyamides each with high electrical resistance: when molecular mobility is reduced in a high temperature range by the presence of the above described cyclic structure, even with some of the aromatic rings being carbonized in the high temperature range, the carbonized aromatic rings are less likely to come close to each other (the closeness may be caused by the movement of the rings); thus, the polyamides have high electrical resistance.
Therefore, a crystalline polyamide having a component unit derived from the diamine having the above-described cyclic structure and maintaining its crystallinity without becoming completely amorphous is considered to have the following features: high fluidity during injection molding and mechanical strength due to its crystallinity, and has high mechanical strength and electrical resistance even in a high temperature range due to its high glass transition temperature (Tg); and is more likely to maintain the high mechanical strength and electrical resistance.
Hereinafter, the specific configuration of the present invention will be described in more detail.

1. Crystalline Polyamide Resin

The crystalline polyamide resin contains a dicarboxylic acid-derived component unit (a) and a diamine-derived component unit (b), and as the diamine-derived component unit (b), contains a component unit (b2) derived from a diamine represented by formula (1).
The melting point (Tm) of the crystalline polyamide resin is observed with a differential scanning calorimeter (DSC). The melting point (Tm) of the crystalline polyamide resin is preferably 270°C or more and 360°C or less. A crystalline polyamide resin having a melting point (Tm) of 270°C or more is less likely to have impaired mechanical strength, heat resistance, and the like. A crystalline polyamide resin having a melting point (Tm) of 360°C or less is more likely to have improved moldability because the molding temperature does not need to be excessively high. The melting point (Tm) of the crystalline polyamide resin is more preferably 275°C or more and 330°C or less.
The crystalline polyamide resin of the present invention has a reduced molecular orientation due to the above-described cyclic structure, thus has satisfactorily lowered crystallinity. Therefore, this crystalline polyamide resin has a satisfactorily low melting point (Tm) compared to other crystalline polyamide resins having a similar structure (for example, structures derived from an aromatic dicarboxylic acid and an alkylenediamine). This crystalline polyamide resin thus can be easily molded despite having high mechanical strength.
The glass transition temperature (Tg) of the crystalline polyamide resin is preferably 140°C or more, more preferably 155°C or more. A crystalline polyamide resin having a glass transition temperature (Tg) of the above temperature or more is less likely to have impaired heat resistance, and can have increased mechanical strength and electrical resistance in a high temperature range. The upper limit of the glass transition temperature (Tg) of the crystalline polyamide resin is not limited, but may be 200°C from the viewpoint of not impairing the moldability.
The heat of fusion ($\Delta H$) of the crystalline polyamide resin is preferably 10 mJ/mg or more. A crystalline polyamide resin having heat of fusion ($\Delta H$) of 10 mJ/mg or more is crystalline, and thus more likely to increase the fluidity during injection molding and the mechanical strength. From the same viewpoint, the heat of fusion ($\Delta H$) of the crystalline polyamide resin is more preferably 15 mJ/mg, even more preferably 20 mJ/mg or more. The upper limit of the heat of fusion ($\Delta H$) of the crystalline polyamide resin is not limited, but may be 90 mJ/mg from the viewpoint of not impairing the moldability.

The heat of fusion (ΔH), melting point (Tm) and glass transition temperature (Tg) of the polyamide resin can be measured with a differential scanning calorimeter (DSC220C, manufactured by Seiko Instruments Inc.).

Specifically, about 5 mg of a polyamide resin is sealed in an aluminum pan for measurement and heated from room temperature to 350°C at the rate of 10°C/min. For completely melting the resin, the resin is held at 350°C for 3 minutes and then cooled to 30°C at the rate of 10°C/min. After allowed to stand at 30°C for 5 minutes, the resin is heated a second time to 350°C at the rate of 10°C/min. The endothermic peak temperature (°C) in this second heating is used as the melting point (Tm) of the crystalline polyamide resin, and the displacement point corresponding to the glass transition is used as the glass transition temperature (Tg). The heat of fusion (ΔH) is determined from the area of the endothermic peak of crystallization during the second heating according to JIS K7122.

The melting point (Tm), glass transition temperature (Tg), and heat of fusion (ΔH) of the crystalline polyamide resin can be adjusted by the structure of the dicarboxylic acid-derived component unit (a), the content of the component unit (b2) derived from a diamine represented by formula (1), the content ratio of the component unit (b1) derived from an alkylenediamine having 4 to 18 carbon atoms to the component unit (b2) derived from a diamine represented by formula (1), and/or the number of carbon atoms in the alkylenediamine having 4 to 18 carbon atoms.

For example, from the viewpoint of setting the melting point (Tm) of the polyamide resin that is crystalline within the above-described range, the polyamide resin is preferably a semi-aromatic polyamide resin. The melting point (Tm) of a semi-aromatic polyamide resin usually does not exceed 340°C. From the viewpoint of obtaining satisfactory heat resistance of the polyamide resin by increasing its melting point (Tm) to some extent, the polyamide resin is preferably a semi-aromatic polyamide resin whose main component unit is formed of repeating units each composed of a component unit derived from an aromatic dicarboxylic acid or alicyclic dicarboxylic acid and a component unit derived from an aliphatic diamine. More preferred is a semi-aromatic polyamide resin formed of repeating units each composed of a component unit derived from an aromatic dicarboxylic acid and a component unit derived from an aliphatic diamine.

For increasing the heat of fusion (ΔH) of the crystalline polyamide resin, it is preferred to lower the content of the component unit (b2) and the content ratio of the component unit (b2) (namely, the ratio of the component unit (b2) to the total number of moles of the diamine-derived component unit (b)). On the other hand, for increasing the glass transition temperature (Tg) of the crystalline polyamide resin and lowering the melting point (Tm) of the crystalline polyamide resin, it is preferred, for example, to increase the content of the component unit (b2) and the content ratio of the component unit (b2) (namely, the ratio of the component unit (b2) to the total number of moles of the diamine-derived component unit (b)).

The intrinsic viscosity [η] of the crystalline polyamide resin measured in 96.5% sulfuric acid at a temperature of 25°C is preferably 0.6 dl/g or more and 1.5 dl/g or less. A crystalline polyamide resin having intrinsic viscosity [η] of 0.6 dl/g or more is more likely to satisfactorily increase the mechanical strength (for example, toughness) of the molded article. A crystalline polyamide resin having intrinsic viscosity [η] of 1.5 dl/g or less is less likely to impair the fluidity of the resin composition during molding. From the same viewpoint, the intrinsic viscosity [η] of the crystalline polyamide resin is more preferably 0.8 dl/g or more and 1.2 dl/g or less. The intrinsic viscosity [η] can be adjusted, for example, by the amount of terminal blocking of the crystalline polyamide resin.

The intrinsic viscosity of the crystalline polyamide resin can be measured according to JIS K6810-1977.

Specifically, 0.5 g of a crystalline polyamide resin is dissolved in 50 ml of 96.5% sulfuric acid solution to prepare a sample solution. The intrinsic viscosity can be obtained by measuring the falling time (seconds) of the sample solution with an Ubbelohde viscometer under the condition of 25±0.05°C, and applying the obtained value to the following equation for calculation.

$$[\eta] = \eta SP/(C(1+0.205\eta SP))$$

In the above equation, symbols and variables are defined as follows.

[η]: Intrinsic viscosity (dl/g)
ηSP: Specific viscosity
C: Sample concentration (g/dl)

ηSP is obtained by the following equation.

$$\eta SP = (t-t0)/t0$$

t: Falling time of sample solution (seconds)
t0: Falling time of blank sulfuric acid (seconds)

Dicarboxylic Acid-derived Component Unit (a)

The dicarboxylic acid-derived component unit (a) is not limited, but from the viewpoint of facilitating the increase of the melting point (Tm) and crystallinity, for example, the dicarboxylic acid-derived component unit (a) preferably contains a component unit derived from an aromatic dicarboxylic acid or an alicyclic dicarboxylic acid.

Examples of the aromatic dicarboxylic acid include terephthalic acid, naphthalenedicarboxylic acid, and esters thereof. Examples of the alicyclic dicarboxylic acid include cyclohexanedicarboxylic acid and esters thereof. In particular, from the viewpoint of, for example, obtaining a polyamide resin having high crystallinity and high heat resistance, the dicarboxylic acid-derived component unit (a) preferably contains a component unit derived from an aromatic dicarboxylic acid, more preferably contains a component unit derived from terephthalic acid.

The content of the component unit derived from an aromatic dicarboxylic acid or an alicyclic dicarboxylic acid is not limited, but the total amount of the component unit is preferably 50 mol% or more and 100 mol% or less based on the total number of moles of the dicarboxylic acid-derived component unit (a). A crystalline polyamide resin containing the above-described component unit whose content is 50 mol % or more is more likely to have increased crystallinity. From the same viewpoint, the content of the above-described component unit is more preferably 70 mol% or more and 100 mol% or less.

In the present embodiment, the dicarboxylic acid-derived component unit (a) contains a component unit (a1) derived from terephthalic acid, naphthalenedicarboxylic acid, and/or cyclohexanedicarboxylic acid. Component units (a1) derived from terephthalic acid, naphthalenedicarboxylic acid, and cyclohexanedicarboxylic acid can increase the crystallinity of a polyamide, unlike isophthalic acid used in, for example, PTLs 1 to 3. From the viewpoint of obtaining satisfactory crystallinity of the polyamide resin, the content of the component unit (a1) is more than 20 mol% and 100 mol% or less based on the total number of moles of the dicarboxylic acid-derived component unit (a). From the viewpoint of further increasing the crystallinity of the polyamide resin, the content of the component unit (a1) based on the total number of moles of the dicarboxylic acid-derived component unit (a) is preferably 45 mol% or more and 100 mol% or less, more preferably 50 mol% or more and 99 mol% or less, even more preferably more than 80 mol% and 99 mol% or less, and particularly preferably more than 90 mol% and 99 mol% or less.

The dicarboxylic acid-derived component unit (a) may contain a component unit (a2) derived from an aromatic carboxylic acid other than the component unit (a1) or a component unit (a3) derived from an aliphatic dicarboxylic acid having 4 to 20 carbon atoms within ranges that do not impair the effects of the present invention. However, from the viewpoint of not impairing the crystallinity of the resin, the content of component units derived from isophthalic acid and aliphatic dicarboxylic acid having 4 to 18 carbon atoms other than adipic acid is preferably small, specifically 20 mol% or less, more preferably 10 mol% or less, based on the total number of moles of the dicarboxylic acid-derived component unit (a).

Examples of the component unit (a2) derived from an aromatic dicarboxylic acid other than terephthalic acid include component units derived from isophthalic acid and 2-methylterephthalic acid. In particular, a component unit derived from isophthalic acid is preferred. From the viewpoint of obtaining satisfactory crystallinity of the polyamide resin, the content of the component unit (a2) is preferably 1 mol% or more and 50 mol% or less, more preferably 1 mol% or more and 20 mol% or less, even more preferably 1 mol% or more and 10 mol% or less, and particularly preferably 1 mol% or more and 5 mol% or less, based on the total number of moles of the dicarboxylic acid-derived component unit (a).

The component unit (a3) derived from an aliphatic dicarboxylic acid is a component unit derived from an aliphatic dicarboxylic acid having an alkylene group having 4 to 20 carbon atoms, and preferably a component unit derived from an aliphatic dicarboxylic acid having an alkylene group having 6 to 12 carbon atoms. Examples of the aliphatic dicarboxylic acid include succinic acid, glutaric acid, adipic acid, 2-methyladipic acid, trimethyladipic acid, pimelic acid, 2,2-dimethylglutaric acid, 3,3-diethylsuccinic acid, azelaic acid, sebacic acid, and suberic acid. In particular, adipic acid and sebacic acid are preferred. From the viewpoint of obtaining satisfactory crystallinity of the polyamide resin, the content of the component unit (a3) is preferably 0 mol% or more and 40 mol% or less, more preferably 0 mol% or more and 20 mol% or less, even more preferably 1 mol% or more and 10 mol% or less, and particularly preferably 1 mol% or more and 5 mol% or less, based on the total number of moles of the dicarboxylic acid-derived component unit (a).

The semi-aromatic polyamide resin (A) may further contain, in addition to the above-described component units (a1), (a2), and (a3), a small amount of a component unit derived from a tribasic or higher polyvalent carboxylic acid, such as trimellitic acid or pyromellitic acid. The content of such a polyvalent carboxylic acid component unit may be 0 mol% or more and 5 mol% or less based on the total number of moles of the dicarboxylic acid-derived component unit (a).

Diamine-derived Component Unit (b)

The diamine-derived component unit (b) contains a component unit (b 1) derived from an alkylenediamine having 4 to 18 carbon atoms and a component unit (b2) derived from an alkylenediamine having a specific cyclic structure.

Component unit (b1) derived from alkylenediamine having 4 to 18 carbon atoms

The number of carbon atoms in the alkylenediamine having 4 to 18 carbon atoms is more preferably 4 or more and 10 or less from the viewpoint of minimizing the reduction of Tg of the resin.

The alkylenediamine having 4 to 18 carbon atoms may include a linear alkylenediamine or a branched alkylenediamine. From the viewpoint of increasing the crystallinity of the resin, the alkylenediamine having 4 to 18 carbon atoms preferably includes a linear alkylenediamine. That is, the component unit derived from an alkylenediamine having 4 to 18 carbon atoms preferably contains a component unit derived from a linear alkylenediamine.

Examples of the alkylenediamine having 4 to 18 carbon atoms include linear alkylenediamines, such as 1,4-diaminobutane, 1,6-diaminohexane, 1,7-diaminoheptane, 1,8-octanediamine, 1,9-nonanediamine, and 1,10-decanediamine, and branched alkylenediamines, such as 2-methyl-1,5-pentanediamine and 2-methyl-1,8-octanediamine. In particular, 1,4-diaminobutane, 1,6-diaminohexane, 1,9-nonanediamine, 1,10-decanediamine, and 2-methyl-1,5-pentanediamine are preferred, and 1,6-diaminohexane and 1,10-decanediamine are more preferred. The above-described alkylenediamines may be used individually or in combination.

Component unit (b2) derived from alkylenediamine having specific cyclic structure

The alkylenediamine having a specific cyclic structure is a diamine represented by following formula (1).

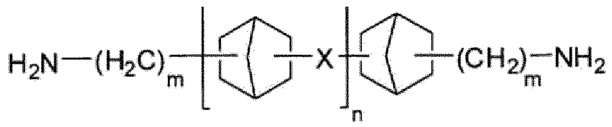

... Formula (1)

In formula (1), n and two m's are each independently 0 or 1, and -X- is a single bond or a divalent group selected from the group consisting of -O-, -S-, $-SO_2-$, -CO-, and $-CH_2-$.

The diamine represented by formula (1) is preferably norbornanediamine (m = n = 0) or bis(aminomethyl)norbornane (m = 1, n = 0), more preferably bis(aminomethyl)norbornane, and even more preferably 2,5-bis(aminomethyl)norbornane or 2,6-bis(aminomethyl)norbornane.

In particular, a diamine with one or both of the two m's being 1 is more likely to increase the mechanical strength of the polyamide resin and maintain high mechanical strength of the polyamide resin.

When the diamine represented by formula (1) has geometrical isomers (for example, trans isomer and cis isomer), any isomer may be used, and the ratio of the isomers is not limited.

The content of the component unit (b2) derived from a diamine represented by formula (1) is not limited, so long as a crystalline polyamide resin whose melting point (Tm) is observed with DSC can be obtained. That is, the content of the component unit (b2) derived from a diamine represented by formula (1) depends on the number of carbon atoms and the content of the alkylenediamine having 4 to 18 carbon atoms to be used in combination, but is preferably 10 mol% or more and 45 mol% or less based on the total number of moles of the diamine-derived component unit (b). A component unit (b2) of 10 mol % or more is more likely to increase the glass transition temperature (Tg) of the polyamide resin to increase mechanical strength and electrical resistance in a high temperature range, and maintain the high mechanical strength and electrical resistance of the polyamide resin. A component unit (b2) of 10 mol % or more can satisfactorily lower the melting point (Tm) of the polyamide resin, and thus is more likely to increase the moldability of the polyamide resin. A component unit (b2) of 45 mol% or less is less likely to impair the crystallinity of the polyamide resin more than necessary (the resin is less likely to become amorphous), and thus is less likely to impair the fluidity during injection molding and mechanical strength of the resin. The content of the component unit (b2) derived from a diamine represented by formula (1) is more preferably 15 mol% or more and 45 mol% or less, even more preferably 25 mol% or more and 40 mol% or less, and particularly preferably 27 mol% or more and 38 mol% or less, based on the total number of moles of the diamine-derived component unit (b).

The diamine-derived component unit (b) may further contain a component unit (b3) derived from another diamine within a range that does not impair the effects of the present invention. Examples of the diamine for the component unit (b3) include aromatic diamines and alicyclic diamines. The content of the component unit (b3) derived from another diamine may be 50 mol% or less based on the total number of moles of the diamine-derived component unit (b).

In the crystalline polyamide resin, the terminal groups of at least some molecules may be blocked with a terminal blocking agent from the viewpoint of increasing thermal stability of a compound or during the molding and further increasing mechanical strength. For example, the terminal blocking agent is preferably a monoamine when the terminals of the molecules are carboxyl group, and is preferably a monocarboxylic acid when the terminals of the molecules are amino group.

Examples of the monoamine include aliphatic monoamines, such as methylamine, ethylamine, propylamine, and butylamine; alicyclic monoamines, such as cyclohexylamine and dicyclohexylamine; and aromatic monoamines, such as aniline and toluidine. Examples of the monocarboxylic acid include aliphatic monocarboxylic acids having 2 to 30 carbon atoms, such as acetic acid, propionic acid, butyric acid, valeric acid, caproic acid, caprylic acid, lauric acid, tridecylic acid, myristic acid, palmitic acid, stearic acid, oleic acid, and linoleic acid; aromatic monocarboxylic acids, such as benzoic acid, toluic acid, naphthalenecarboxylic acid, methylnaphthalenecarboxylic acid, and phenylacetic acid; and alicyclic monocarboxylic acids, such as cyclohexanecarboxylic acid. The aromatic monocarboxylic acids and alicyclic monocarboxylic acids may have a substituent on the cyclic structure moiety.

Production Method

The crystalline polyamide resin can be produced, for example, by polycondensation of the above-described dicarboxylic acid and diamine in a uniformly dissolved solution. Specifically, as described in WO03/085029, a low-order condensate is obtained by heating the dicarboxylic acid and the diamine in the presence of a catalyst, and a shear stress is applied to the melt of this low-order condensate for subjecting the melt to polycondensation, thereby producing the crystalline polyamide resin.

From the viewpoint of adjusting the intrinsic viscosity of the crystalline polyamide resin, the above-described terminal blocking agent may be added to the reaction system. The intrinsic viscosity [η] (or molecular weight) of the crystalline polyamide resin can be adjusted by adjusting the amount of the terminal blocking agent to be added.

The terminal blocking agent is added to the reaction system of the dicarboxylic acid and the diamine. The amount of the terminal blocking agent to be added is preferably 0.07 mol or less, more preferably 0.05 mol or less, based on 1 mol of the total dicarboxylic acid.

2. Resin Composition

A resin composition of the present invention contains the crystalline polyamide resin of the present invention.

The content of the crystalline polyamide resin depends on the application of the resin composition, but may be, for example, 35 parts by mass or more and 95 parts by mass or less based on 100 parts by mass of the resin composition. A crystalline polyamide resin whose content is above a certain amount is more likely to exhibit the properties derived from the resin.

The resin composition of the present invention may further contain one or more additional components other than the crystalline polyamide resin, as necessary.

Examples of the additional components include fibrous fillers, nucleating agents, elastomers (rubber), flame retardants (for example, bromine, chlorine, phosphorus, antimony, and inorganic flame retardants), fluidity improvers, antistatic agents, release agents, antioxidants (for example, phenols, amines, sulfur, and phosphorus antioxidants), heat stabilizers (lactone compounds, vitamin E, hydroquinones, copper halides, and iodine compounds), light stabilizers (for example, benzotriazoles, triazines, benzophenones, benzoates, hindered amines, and oxanilides), and other polymers (for example, polyolefins, olefin copolymers, such as ethylene/propylene copolymer, ethylene/1-butene copolymer, and propylene/1-butene copolymer, polystyrene, polyamide, polycarbonate, polyacetal, polysulfone, polyphenylene oxide, fluororesin, silicone resin, and LCP). In particular, the resin composition of the present invention may further contain a fibrous filler from the viewpoint of increasing the mechanical strength of the molded article.

The fibrous filler can impart high mechanical strength to the resin composition. Examples of the fibrous filler include glass fibers, wollastonite, potassium titanate whiskers, calcium carbonate whiskers, aluminum borate whiskers, magnesium sulfate whiskers, zinc oxide whiskers, milled fibers, and cut fibers. The above-described fibrous fillers may be used individually or in combination. In particular, wollastonite, glass fibers, and potassium titanate whiskers are preferred and wollastonite and glass fibers are more preferred as they can easily increase, for example, the mechanical strength of the molded article.

The average fiber length of the fibrous filler may be, for example, 1 μm or more and 20 mm or less, preferably 5 μm or more and 10 mm or less, from the viewpoints of the moldability of the resin composition and the mechanical strength and heat resistance of the obtained molded article. In addition, the aspect ratio of the fibrous filler may be, for example, 5 or more and 2,000 or less, preferably 30 or more and 600 or less.

The average fiber length and average fiber diameter of the fibrous filler can be measured by the following method.

1) After the resin composition is dissolved in a hexafluoroisopropanol/chloroform solution (10/90 vol%), the resulting solution is filtered and the obtained residue is collected.
2) The residue obtained in the above-described step 1) is dispersed in water, and the fiber length (Li) and the fiber diameter (Di) of each of randomly selected 300 fibers are measured with an optical microscope (magnification: 50×). Then, qi is defined as the number of fibers whose fiber length is Li, and the weight average length (Lw) is

calculated based on the following equation, and the weight average length (Lw) is used as the average fiber length of the fibrous filler.

$$\text{Weight average length (Lw)} = (\Sigma qi \times Li^2)/(\Sigma qi \times Li)$$

In the similar manner, ri is defined as the number of fibers having a fiber diameter of Di, and the weight average diameter (Dw) is calculated based on the following equation, and the weight average diameter (Dw) is used as the average fiber diameter of the fibrous filler.

$$\text{Weight average diameter (Dw)} = (\Sigma ri \times Di^2)/(\Sigma ri \times Di)$$

The content of the fibrous filler is not limited, and may be, for example, 15 parts by mass or more and 70 parts by mass or less based on the total of 100 parts by mass of the crystalline polyamide resin and the fibrous filler.

The resin composition of the present invention can be prepared by mixing the above-described crystalline polyamide resin and, as necessary, additional component(s) by a known resin kneading method, such as a method using a Henschel mixer, V blender, ribbon blender, or tumbler blender. Alternatively, the resin composition can be produced, after the mixing, by melt-kneading the mixture in a single-screw extruder, multi-screw extruder, kneader, or Banbury mixer, and then granulating or pulverizing the resulting melt kneaded product.

3. Application of Resin Composition

The resin composition of the present invention is molded by a known molding method, such as compression molding, injection molding, or extrusion molding, to be used as various molded articles.

A molded article of the resin composition of the present invention can be used for various applications. Examples of such applications include the following: automotive exterior parts, such as radiator grilles, rear spoilers, wheel covers, wheel caps, cowl vent grilles, air outlet louvers, air scoops, hood bulges, sunroofs, sunroof rails, fenders, and back doors; parts in automotive engine rooms, such as cylinder-head covers, engine mounts, air intake manifolds, throttle bodies, air intake pipes, radiator tanks, radiator supports, water pump inlets, water pumps, water pump outlets, thermostat housings, cooling fans, fan shrouds, oil pans, oil filter housings, oil filler caps, oil level gauges, oil pumps, timing belts, timing belt covers, and engine covers; automotive fuel system parts, such as fuel caps, fuel filler tubes, automotive fuel tanks, fuel sender modules, fuel cutoff valves, quick connectors, canisters, fuel delivery pipes, and fuel filler necks; automotive drive line parts, such as shift lever housings and propeller shafts; automotive chassis parts, such as stabilizer bars, linkage rods, and engine mount brackets; automotive functional parts such as window regulators, door locks, door handles, outside door mirror stays, wipers and parts thereof, accelerator pedals, pedal modules, joints, resin screws, nuts, bushes, seal rings, bearings, bearing retainers, gears, and actuators; automotive electronics parts, such as wire harness connectors, relay blocks, sensor housings, fuse parts, encapsulations, ignition coils, and distributor caps; fuel system parts for general purpose apparatuses, such as fuel tanks for general purpose apparatuses (for example, brush cutters, lawn mowers, and chain saws); electrical and electronic parts, such as connectors and LED reflectors; building material parts; industrial equipment parts; small housings (including housings for personal computers and mobile phones); various housings, such as exterior molded products; and exterior parts.

In particular, the resin composition of the present invention has advantageous features, such as high mechanical strength and electrical resistance in a high temperature range, and thus can be suitably used for parts for electrical equipment.

Examples

Hereinafter, the present invention is described with reference to Examples. The Examples should not be construed as limiting the scope of the present invention.

Experiment 1

For observing how the thermal properties of a polyamide resin are changed by the presence of the component unit (b2) derived from a diamine represented by the formula (1) as the diamine-derived component unit (b), experiments were conducted as follows.

In the following experiments, the intrinsic viscosity [η], melting point (Tm) and glass transition temperature (Tg) of a resin were measured by the following methods.

Intrinsic viscosity [η]

A sample solution was prepared by dissolving 0.5 g of a polyamide resin in 50 ml of 96.5% sulfuric acid solution according to JIS K6810-1977. The falling time (seconds) of the obtained sample solution was measured with an Ubbelohde viscometer under the condition of $25\pm0.05°C$. The intrinsic viscosity [η] of the polyamide resin was calculated by applying the measurement results to the following equation.

$$[\eta] = \eta SP/(C(1+0.205\eta SP))$$

$$\eta SP = (t-t0)/t0$$

[η]: Intrinsic viscosity (dl/g)
ηSP: Specific viscosity
C: Sample concentration (g/dl)
t: Falling time of sample solution (seconds)
t0: Falling time of blank sulfuric acid (seconds)

Melting point (Tm), Glass transition temperature (Tg), and Heat of fusion (ΔH)

The heat of fusion (ΔH), melting point (Tm) and glass transition temperature (Tg) of the polyamide resin were measured with a differential scanning calorimeter (DSC220C, manufactured by Seiko Instruments Inc.)

Specifically, about 5 mg of a polyamide resin was sealed in an aluminum pan for measurement and heated from room temperature to 350°C at the rate of 10°C/min. For completely melting the resin, the resin was held at 350°C for 3 minutes and then cooled to 30°C at the rate of 10°C/min. After allowed to stand at 30°C for 5 minutes, the resin was heated a second time to 350°C at the rate of 10°C/min. The endothermic peak temperature (°C) in this second heating was used as the melting point (Tm) of the crystalline polyamide resin, and the displacement point corresponding to the glass transition was used as the glass transition temperature (Tg) of the crystalline polyamide resin. The heat of fusion (ΔH) was determined from the area of the endothermic peak of crystallization during the second heating according to JIS K7122.

Synthesis example 1

An autoclave having an internal capacity of 1 L was charged with 259.5 g (1561.7 mmol) of terephthalic acid, 118.9 g (1023.1 mmol) of 1,6-diaminohexane, 85.0 g (551.1 mmol) of norbornanediamine, 0.37 g of sodium hypophosphite monohydrate, and 81.8 g of distilled water, and purged with nitrogen. Stirring was started from 190°C, and the internal temperature of the autoclave was raised to 250°C over 3 hours. At this time, the internal pressure of the autoclave was increased to 3.0 MPa. After the reaction was continued for 1 hour, the autoclave was vented to the atmosphere through a spray nozzle installed at the bottom thereof, and a low-order condensate was extracted. Subsequently, the low-order condensate was cooled to room temperature, and then was pulverized with a pulverizer until the condensate has a particle size of 1.5 mm or less and dried at 110°C for 24 hours. The intrinsic viscosity [η] of the obtained low-order condensate was 0.12 dl/g.

Next, this low-order condensate was placed in a solid-state polymerization apparatus having shelves, and after the apparatus was purged with nitrogen, the temperature was raised to 215°C over about 1 hour and 30 minutes. After the reaction was continued for 1 hour and 30 minutes, the temperature was lowered to room temperature. The intrinsic viscosity [η] of the obtained prepolymer was 0.45 dl/g.

The obtained prepolymer was then melt-polymerized in a twin-screw extruder with a screw diameter of 30 mm and LID of 36 under the conditions of a barrel setting temperature of 330°C, a screw rotation speed of 200 rpm, and a resin feed rate of 6 kg/h, thereby obtaining polyamide resin 1.

Obtained polyamide resin 1 had an intrinsic viscosity [η] of 0.97 dl/g, a melting point (Tm) of 312°C, a glass transition temperature (Tg) of 167°C, and a heat of fusion (ΔH) of 44 mJ/mg.

Synthesis examples 2 to 6

Polyamide resins 2 to 6 were obtained in the same manner as in Synthesis example 1, except that the ratio between 1,6-diaminohexane and norbornanediamine was changed while the total amount of 1,6-diaminohexane and norbornanediamine charged in the autoclave was maintained.

Synthesis example 7

An autoclave having an internal capacity of 13.6 L was charged with 2,774 g (16.7 mol) of terephthalic acid, 1,196 g (7.2 mol) of isophthalic acid, 2800 g (24.3 mol) of 1,6-diaminohexane, 36.6 g (0.3 mol) of benzoic acid, 5.7 g of sodium hypophosphite monohydrate, and 545 g of distilled water, and was purged with nitrogen. Stirring was started from 190°C, and the internal temperature of the autoclave was raised to 250°C over 3 hours. At this time, the internal pressure of the autoclave was increased to 3.0 MPa. After the reaction was continued for 1 hour, the autoclave was vented to the atmosphere through a spray nozzle installed at the bottom thereof, and a low-order condensate was extracted. Subsequently, the low-order condensate was cooled to room temperature, and then was pulverized with a pulverizer until the condensate has a particle size of 1.5 mm or less and dried at 110°C for 24 hours. The intrinsic viscosity [η] of the obtained low-order condensate was 0.15 dl/g.

Next, this low-order condensate was placed in a solid-state polymerization apparatus having shelves, and after the apparatus was purged with nitrogen, the temperature was raised to 215°C over about 1 hour and 30 minutes. After the reaction was continued for 1 hour and 30 minutes, the temperature was lowered to room temperature. The intrinsic viscosity [η] of the obtained prepolymer was 0.20 dl/g.

The obtained prepolymer was then melt-polymerized in a twin-screw extruder with a screw diameter of 30 mm and LID of 36 under the conditions of a barrel setting temperature of 330°C, a screw rotation speed of 200 rpm, and a resin feed rate of 6 kg/h, thereby obtaining polyamide resin 7.

Obtained polyamide resin 7 had an intrinsic viscosity [η] of 1.0 dl/g, a melting point (Tm) of 330°C, a glass transition temperature (Tg) of 125°C, and a heat of fusion (ΔH) of 55 mJ/mg.

Table 1 shows the compositions, melting points (Tm), and glass transition temperatures (Tg) of polyamide resins 1 to 7. In Table 1, "PA1" to "PA7" refer to respective polyamide resins 1 to 7. "TA" refers to terephthalic acid, "IA" isophthalic acid, "HMDA" 1,6-diaminohexane, and "NBDA" norbornanediamine.

Table 1

| | Dicarboxylic acid-derived component unit (a) | | Diamine-derived component unit (b) | | Intrinsic viscosity (dl/g) | Tm (°C) | Tg (°C) | ΔH (mJ/mg) |
|---|---|---|---|---|---|---|---|---|
| | Composition (a1/a2) | Molar ratio (a1/a2) | Composition (b1/b2) | Molar ratio (b1/b2) | | | | |
| PA1 | TA/- | 100/0 | HMDA/ NBDA | 65/35 | 0.97 | 312 | 167 | 44 |
| PA2 | TA/- | 100/0 | HMDA/ NBDA | 70/30 | 0.95 | 325 | 162 | 44 |
| PA3 | TA/- | 100/0 | HMDA/ NBDA | 60/40 | 0.90 | 305 | 172 | 28 |
| PA4 | TA/- | 100/0 | HMDA/ NBDA | 50/50 | 0.93 | - | 182 | 0 |
| PA5 | TA/- | 100/0 | HMDA/ NBDA | 30/70 | 0.90 | - | 203 | 0 |
| PA6 | TA/- | 100/0 | HMDA/ NBDA | 20/80 | 0.92 | - | 218 | 0 |
| PA7 | TA/IA | 70/30 | HMDA/- | 100/0 | 1.0 | 330 | 125 | 55 |

As is clear from Table 1, polyamide resins 1 to 6 had lower melting points (Tm) and higher glass transition temperatures (Tg) than polyamide resin 7. Polyamide resins 1 to 6 each contain a component unit (b2) derived from a diamine represented by the formula (1) as the diamine-derived component unit (b), and polyamide resin 7 contains no component unit (b2) derived from a diamine represented by the formula (1).

Experiment 2

For observing how the flow length, mechanical properties, and electrical characteristics of a polyamide resin are changed by the presence of the component unit (b2) derived from a diamine represented by the formula (1) as the diamine-derived component unit (b), experiments using polyamide resins 1 to 7 were conducted as follows.

Preparation of Polyamide Resin Composition

In a tumbler blender, 70 parts by mass of polyamide resin 1 or 7 and 30 parts by mass of glass fiber (CSX 3J-451, manufactured by Nitto Boseki Co., Ltd) were mixed. The mixture was melt-kneaded with 30 mmφ vented twin-screw extruder at a cylinder temperature of 300 to 335°C. The resulting kneaded product was extruded into strands and cooled in a water bath. The strands were collected by a pelletizer and cut to obtain a polyamide resin composition in the form of pellets.

Flow Length

Each polyamide resin composition was injected under the conditions as follows by using a bar flow mold with a width of 10 mm and a thickness of 0.5 mm, and the flow length (mm) of the polyamide resin composition in the mold was measured. A longer flow length indicates better injection fluidity.

Molding machine: EC75N-2A, manufactured by Shibaura Machine Co., Ltd.
Injection setting pressure: 2,000 kg/$cm^2$
Molding machine cylinder temperature: 335°C
Mold temperature: 160°C

Mechanical properties-1: Tensile strength

The obtained polyamide resin composition was injection molded under the conditions as follows to prepare a test piece based on ASTM-1 (dumbbell specimen) having a thickness of 3.2 mm.

Molding machine: SE50DU, manufactured by Sumitomo Heavy Industries, Ltd.
Molding machine cylinder temperature: melting point of polyamide resin + 10°C
Mold temperature: glass transition temperature of polyamide resin + 20°C

The prepared test piece was allowed to stand at a temperature at in a nitrogen atmosphere at a temperature of 23°C for 24 hours according to ASTM D638. The test piece was then subjected to a tensile test in an atmosphere at a temperature of 150°C to measure the tensile strength and elongation rate (%).

Mechanical properties-2: Flexural strength and flexural modulus

The obtained resin composition was injection molded under the conditions as follows to prepare a strip specimen having 1/8 inch thickness.

Molding machine: SE50DU, manufactured by Sumitomo Heavy Industries, Ltd.
Molding machine cylinder temperature: melting point of polyamide resin + 10°C
Mold temperature: glass transition temperature of polyamide resin + 20°C

The prepared test piece was allowed to stand in a nitrogen atmosphere at a temperature of 23°C for 24 hours according to ASTM D638. The test piece was then subjected to a bending test in an atmosphere at a temperature of 150°C with a bending tester (AB5, span of 51 mm and bending speed of 12.7 mm/min, manufactured by NTESCO) to measure the flexural strength and flexural modulus.

Mechanical properties-3: Heat aging resistance

Test pieces based on ASTM-1 (dumbbell specimen) having a thickness of 3 mm were prepared from each obtained polyamide resin composition.
The obtained test pieces were stored in an air circulating oven at a temperature of 150°C for 504 hours, 1,008 hours, 1,512 hours, and 2,016 hours, respectively, and then removed from the oven and cooled to 23°C. The test pieces were subjected to a tensile test in an atmosphere at a temperature of 23°C and a relative humidity of 50% to measure the tensile strength. The retention of tensile strength was calculated by applying the obtained value to the following equation.

$$\text{Tensile strength retention (heat aging resistance) (\%)} = (\text{tensile strength after heating}/\text{tensile strength before heating}) \times 100$$

Mechanical properties-4: Charpy impact strength

A notched multi-purpose test piece was prepared from the obtained polyamide resin composition in accordance with ISO-179, and subjected to the measurement of the Charpy impact strength (J/m) at 23°C.

Electrical characteristics

A square plate test piece of 100 mm square and having a thickness of 2 mm was molded under the following molding conditions with the following injection molding machine.

Molding machine: EC75N-2A, manufactured by Shibaura Machine Co., Ltd.
Molding machine cylinder temperature: melting point of polyamide resin + 15°C
Mold temperature: 120°C

This square plate test piece was allowed to stand for 24 hours in an atmosphere at a temperature of 23°C and a relative humidity of 50%. In accordance with ASTM D257: 2007, the volume resistivity of the square plate test piece was measured with an electrometer 8340A manufactured by ADC CORPORATION at the inside temperature of 23°C, 80°C, 130°C, 165°C, and 200°C.

Table 2 shows properties of the polyamide resin compositions obtained from polyamide resins 1 and 7, such as the flow length, tensile strength, flexural strength, flexural modulus, Charpy impact strength, and volume resistivity at each temperature. FIG. 1 shows the heat aging resistance (tensile strength retention) of the polyamide resin compositions obtained from polyamide resin 1 and polyamide resin 7. FIG. 2 shows the volume resistivity (at each temperature) of the polyamide resin compositions obtained from polyamide resin 1 and polyamide resin 7.

Table 2

| | | Polyamide resin 1 | Polyamide resin 7 |
|---|---|---|---|
| Flow length L/t | (mm) | 23 | 19 |
| Tensile strength at 150°C | (MPa) | 115 | 92 |
| Flexural strength at 150°C | (MPa) | 183 | 140 |
| Flexural modulus at 150°C | (MPa) | 10300 | 5600 |
| Charpy impact strength at 23°C | ($kJ/m^2$) | 14.4 | 13.3 |
| Heat aging resistance after 504h | (%) | 97 | 84 |
| after 1008h | | 94 | 89 |
| after 1512h | | 96 | 83 |
| after 2016h | | 96 | 92 |
| Volume resistivity at 23°C | ($\Omega\cdot$cm) | $9.8\times10^{14}$ | $1.1\times10^{10}$ |
| at 80°C | | $3.3\times10^{14}$ | $8.7\times10^{14}$ |
| at 130°C | | $9.9\times10^{13}$ | $1.4\times10^{13}$ |
| at 165°C | | $1.7\times10^{12}$ | $4.7\times10^{9}$ |
| at 200°C | | $5.3\times10^{9}$ | $1.5\times10^{8}$ |

As is clear from Table 2 and FIGS. 1 and 2, polyamide resin 1 had a longer flow length (better injection fluidity), better mechanical properties in a high temperature range (around 150°C), better impact resistance at normal temperature, and a higher volume resistivity in a high temperature range than polyamide resin 7. Polyamide resin 1 contains, as the dicarboxylic acid-derived component unit (a), 20 mol% or more of a component unit (a1) derived from terephthalic acid,

naphthalenedicarboxylic acid, or cyclohexanedicarboxylic acid, and, as diamine-derived component unit (b), a component unit (b2) derived from a diamine represented by the formula (1). Polyamide resin 7 contains no component unit (b2) derived from a diamine represented by the formula (1).

This application claims priority based on Japanese Patent Application No. 2020-122161, filed on July 16, 2020, the entire contents of which including the specification, claims, and the drawings are incorporated herein by reference.

Industrial Applicability

The polyamide resins according to the present invention have high mechanical properties and electrical resistance in a high temperature range. Therefore, the present invention is expected to expand the applicability of polyamide resins to parts for electrical equipment that are expected to have high output, and thus contribute to the wider spread of polyamide resins.

## Claims

**1.** A crystalline polyamide resin, comprising:

a dicarboxylic acid-derived component unit (a); and a diamine-derived component unit (b), wherein
the dicarboxylic acid-derived component unit (a) contains a component unit (a1) derived from terephthalic acid, naphthalenedicarboxylic acid, or cyclohexanedicarboxylic acid,
a content of the component unit (a1) is more than 20 mol% and 100 mol% or less based on a total number of moles of the dicarboxylic acid-derived component unit (a), and
the diamine-derived component unit (b) contains

a component unit (b 1) derived from an alkylenediamine having 4 to 18 carbon atoms, and
a component unit (b2) derived from a diamine represented by formula (1) below:

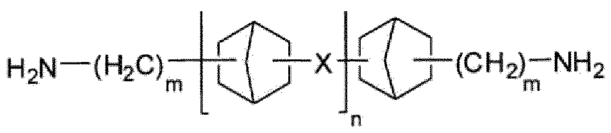

... Formula (1)

wherein
n and two m's are each independently 0 or 1, and
-X- is a single bond or a divalent group selected from the group consisting of -O-, -S-, $-SO_2-$, -CO-, and $-CH_2-$.

**2.** The crystalline polyamide resin according to claim 1, wherein
a content of the component unit (b2) derived from the diamine represented by formula (1) is 10 mol% or more and 45 mol% or less based on a total number of moles of the diamine-derived component unit (b).

**3.** The crystalline polyamide resin according to claim 1 or 2, wherein
a content of the component unit (b2) derived from the diamine represented by formula (1) is 25 mol% or more and 40 mol% or less based on a total number of moles of the diamine-derived component unit (b).

**4.** The crystalline polyamide resin according to any one of claims 1 to 3, wherein
the crystalline polyamide resin has a melting point in a range of 270°C or more and 360°C or less.

**5.** The crystalline polyamide resin according to any one of claims 1 to 4, wherein
the crystalline polyamide resin has a glass transition temperature (Tg) of 140°C or more.

**6.** The crystalline polyamide resin according to any one of claims 1 to 5, wherein
the component unit (b1) derived from the alkylenediamine having 4 to 18 carbon atoms contains a component unit derived from a linear alkylenediamine or a branched alkylenediamine.

**7.** The crystalline polyamide resin according to claim 6, wherein
the linear alkylenediamine or the branched alkylenediamine is a diamine selected from the group consisting of 1,4-diaminobutane, 1,6-diaminohexane, 1,9-nonanediamine, 1,10-decanediamine, and 2-methyl-1,5-pentanediamine.

**8.** The crystalline polyamide resin according to any one of claims 1 to 7, wherein
the dicarboxylic acid-derived component unit (a) further contains a component unit derived from isophthalic acid or adipic acid.

**9.** A resin composition, comprising:
the crystalline polyamide resin according to any one of claims 1 to 8.

**10.** A molded article, comprising:
the resin composition according to claim 9.

**11.** The molded article according to claim 10, wherein
the molded article is a part for electrical equipment.

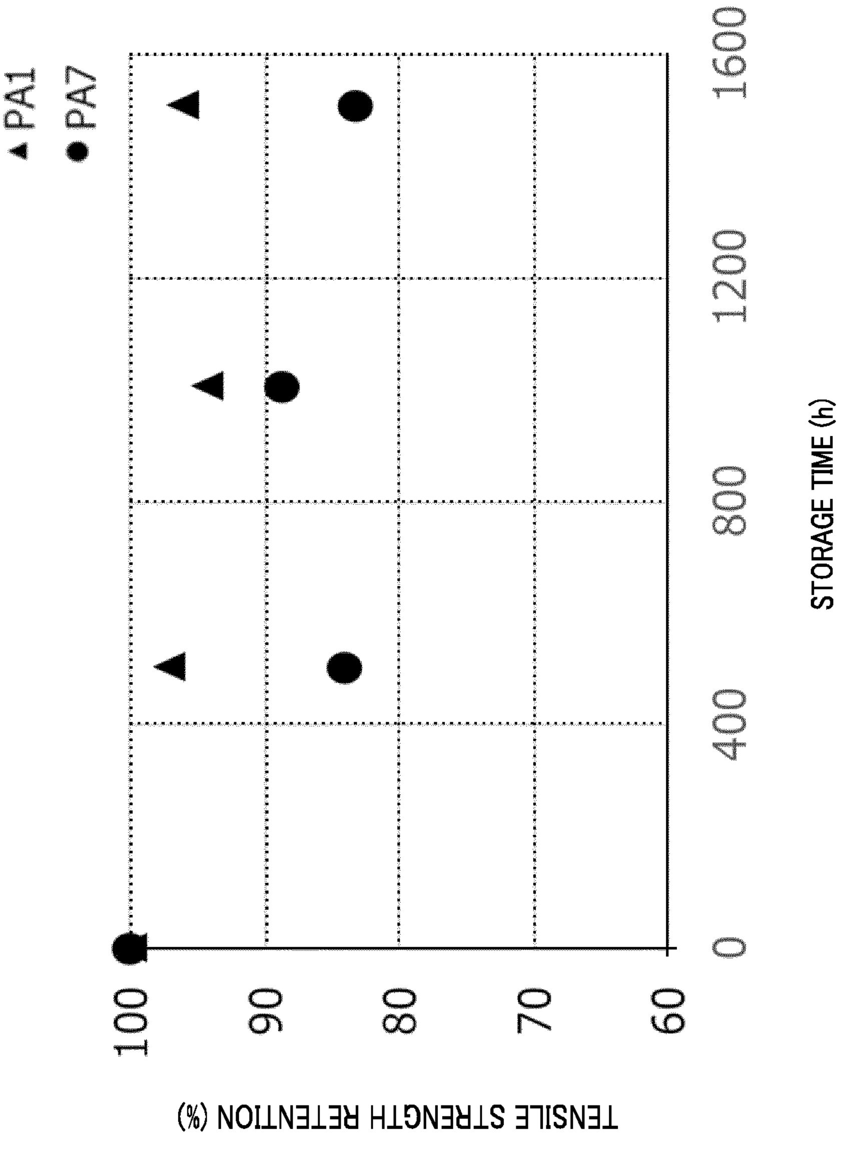

PA1
PA7
100
90
80
70
60
0
400
800
1200
1600
TENSILE STRENGTH RETENTION (%)
STORAGE TIME (h)


FIG. 1

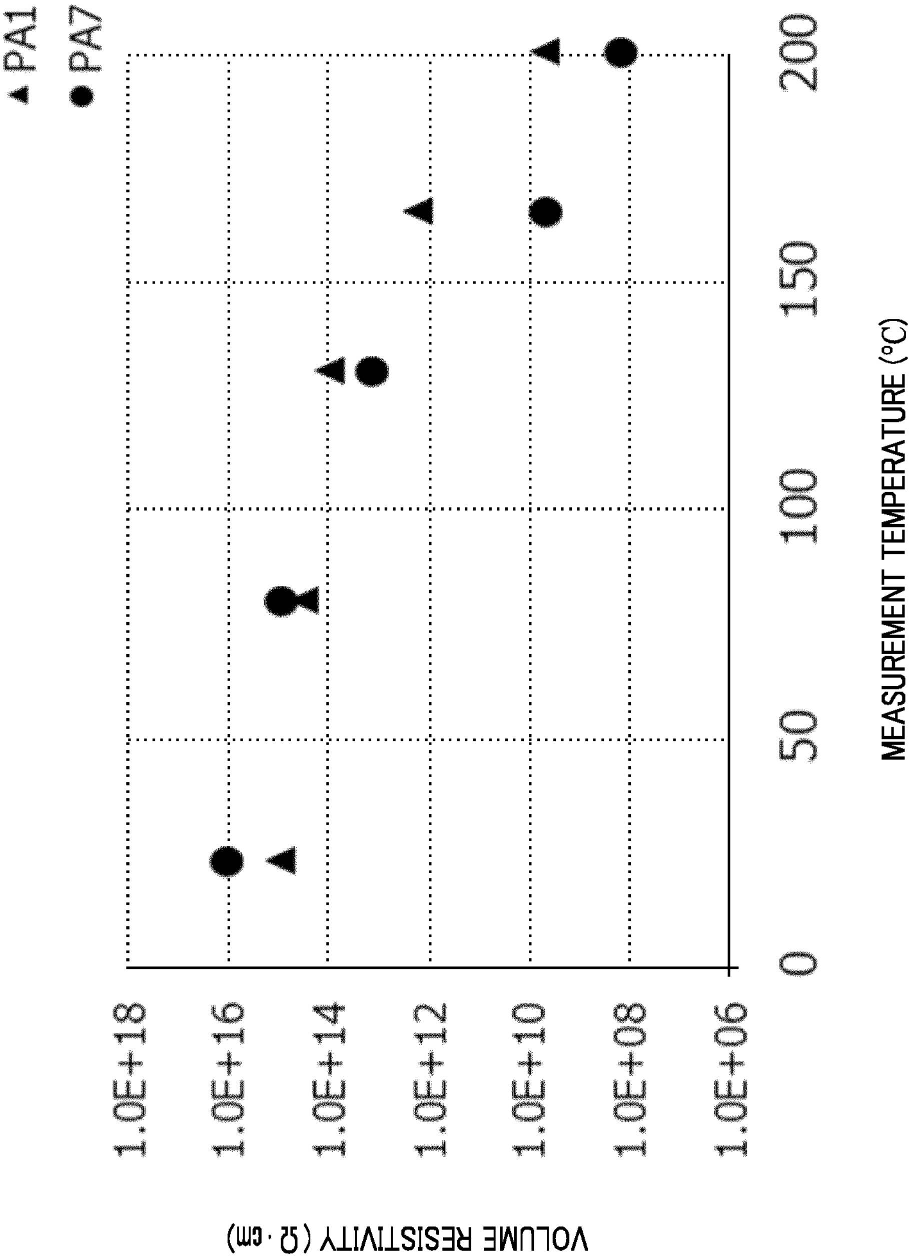
PA1
PA7
VOLUME RESISTIVITY (Ω·cm)
1.0E+18
1.0E+16
1.0E+14
1.0E+12
1.0E+10
1.0E+08
1.0E+06
0
50
100
150
200
MEASUREMENT TEMPERATURE (℃)

FIG. 2

## INTERNATIONAL SEARCH REPORT

International application No. PCT/JP2021/025287

**A. CLASSIFICATION OF SUBJECT MATTER**

C08G 69/26(2006.01)i; C08L 77/06(2006.01)i
FI: C08G69/26; C08L77/06

According to International Patent Classification (IPC) or to both national classification and IPC

**B. FIELDS SEARCHED**

Minimum documentation searched (classification system followed by classification symbols)
C08G69/00-69/50; C08L77/06

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 48-060193 A (FARBWERKE HOECHST AG, VORM. MEISTER LUCIUS & BRUENING) 23 August 1973 (1973-08-23) claims, page 4, upper left column, lines 2-8, examples | 1-11 |
| A | JP 05-043682 A (MITSUI TOATSU CHEMICALS, INC.) 23 February 1993 (1993-02-23) claims 1-2, paragraph [0001], example 2 | 1-11 |
| A | JP 63-154739 A (TORAY INDUSTRIES, INC.) 28 June 1988 (1988-06-28) claims, examples | 1-11 |
| A | JP 2012-062403 A (TOSOH CORP.) 29 March 2012 (2012-03-29) claims 1-2, examples | 1-11 |
| A | JP 53-125497 A (BAYER AG.) 01 November 1978 (1978-11-01) claim 1, examples | 1-11 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search: 08 September 2021 (08.09.2021)

Date of mailing of the international search report: 21 September 2021 (21.09.2021)

Name and mailing address of the ISA/
Japan Patent Office
3-4-3, Kasumigaseki, Chiyoda-ku,
Tokyo 100-8915, Japan

Authorized officer

Telephone No.

Form PCT/ISA/210 (second sheet) (January 2015)

**INTERNATIONAL SEARCH REPORT**

International application No. PCT/JP2021/025287

C (Continuation). DOCUMENTS CONSIDERED TO BE RELEVANT

| Category* | Citation of document, with indication, where appropriate, of the relevant passages | Relevant to claim No. |
|---|---|---|
| A | JP 2018-024792 A (TOYOTA BOSHOKU CORP.) 15 February 2018 (2018-02-15) claims 1-2, examples | 1-11 |

Form PCT/ISA/210 (continuation of second sheet) (January 2015)

**INTERNATIONAL SEARCH REPORT**
Information on patent family members

International application No.
PCT/JP2021/025287

| Patent Documents referred in the Report | Publication Date | Patent Family | Publication Date |
|---|---|---|---|
| JP 48-060193 A | 23 Aug. 1973 | US 3876585 A<br>claims 1-11, column 3, line 64 to column 4, line 2, examples<br>GB 1395595 A | |
| JP 05-043682 A | 23 Feb. 1993 | (Family: none) | |
| JP 63-154739 A | 28 Jun. 1988 | (Family: none) | |
| JP 2012-062403 A | 29 Mar. 2012 | (Family: none) | |
| JP 53-125497 A | 01 Nov. 1978 | GB 1590056 A<br>claim 1, examples | |
| JP 2018-024792 A | 15 Feb. 2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S4860193 A
- JP S53125497 A
- JP S63154739 A
- WO 03085029 A
- JP 2020122161 A